# EUROPEAN PATENT APPLICATION

(11) **EP 4 685 925 A1**
(43) Date of publication of application: **28.01.2026**
(21) Application number: 25182070.0
(22) Date of filing: 11.06.2025
(51) Int. Cl.: H01M 10/613, H01M 10/6555, H01M 10/6557, H01M 50/289

(54) **BATTERY MODULE UNIT, BATTERY PACK, AND METHOD FOR MANUFACTURING BATTERY MODULE UNIT**

(30) Priority: 11.07.2024 JP 2024111506
(71) Applicant: TOYOTA JIDOSHA KABUSHIKI KAISHA, Toyota-shi, Aichi-ken 471-8571 (JP)
(72) Inventor: GOITSUKA, Shinya, Toyota-shi, Aichi-ken 471-8571 (JP)
(74) Representative: Winter, Brandl - Partnerschaft mbB

(57) **Abstract**

The thickness of a heat conductive material can be made uniform. A battery module unit includes: a pair of battery modules disposed in parallel to each other in a state in which the battery modules are opposed to each other; a cooler disposed between the pair of the battery modules in parallel to the battery modules, the cooler being configured to cool the battery modules; a heat conductive material disposed between each of the battery modules and the cooler, each of the heat conductive materials being configured to conduct heat of the corresponding battery module to the cooler; a pair of holding members configured to hold corresponding ends of each of the pair of the battery modules; and spacers disposed between one of the battery modules and the cooler together with the heat conductive material.

## Description

### BACKGROUND

The present disclosure relates to a battery module unit, a battery pack, and a method for manufacturing a battery module unit.

A battery module unit that cools a battery module by a cooler is known (see, for example, Patent Literature 1).

Patent Literature 1: Japanese Unexamined Patent Application Publication No. 2023-046659

### SUMMARY

Note that it is preferable that a heat conductive material be applied between a battery module and a cooler in order to ensure contact between the battery module and the cooler and efficiently carry out heat exchange. In this case, it may be difficult to control the thickness of the heat conductive material between the cooler and the battery module. Therefore, the positioning (e.g., the level adjustment) of the battery module and the cooler may not be properly performed, and thus the thickness of the heat conductive material may not be made uniform.

The present disclosure has been made in view of the above-described problem and a main object thereof is to provide a battery module unit, a battery pack, and a method for manufacturing a battery module unit by which the thickness of a heat conductive material can be made uniform.

In order to achieve the above-described object, one aspect according to the present disclosure is a battery module unit including:
a pair of battery modules disposed in parallel to each other in a state in which the battery modules are opposed to each other;
a cooler disposed between the pair of the battery modules in parallel to the battery modules, the cooler being configured to cool the battery modules;
a heat conductive material disposed between each of the battery modules and the cooler, each of the heat conductive materials being configured to conduct heat of the corresponding battery module to the cooler;
a pair of holding members configured to hold corresponding ends of each of the pair of the battery modules; and
spacers disposed between one of the battery modules and the cooler together with the heat conductive material.

In the above aspect,
each of the battery modules may include a plurality of battery cells, and
each of the spacers may be provided at a position where the spacer does not overlap the battery cells when viewed from a horizontal direction of each of the battery modules.

In the above aspect,
the spacers may be provided on a surface of the cooler, on a surface of one of the battery modules, or in the holding members.

In the above aspect,
the spacers may be disposed between one of the pair of the battery modules and the cooler.

In order to achieve the above-described object, one aspect according to the present disclosure is a battery pack including the above-described battery module unit.

In order to achieve the above-described object, one aspect according to the present disclosure is a method for manufacturing a battery module unit, the method including:
disposing one battery module;
coupling a pair of holding members to corresponding ends of the one battery module;
applying a heat conductive material to one surface of a cooler or one surface of the one battery module;
disposing the cooler on the one battery module so that spacers are sandwiched between respective ends of the one surface of the one battery module and respective ends of the one surface of the cooler and so that in between the spacers, the heat conductive material is sandwiched between the one surface of the one battery module and the one surface of the cooler;
applying a heat conductive material to another surface of the cooler or one surface of another battery module;
disposing the other battery module on the cooler so that the heat conductive material is sandwiched between the one surface of the other battery module and the other surface of the cooler; and
coupling the pair of holding members to corresponding ends of the other battery module.

According to the present disclosure, it is possible to provide a battery module unit, a battery pack, and a method for manufacturing a battery module unit by which the thickness of a heat conductive material can be made uniform.

The above and other objects, features and advantages of the present disclosure will become more fully understood from the detailed description given hereinbelow and the accompanying drawings.

### BRIEF DESCRIPTION OF DRAWINGS

Fig. 1 is a perspective view showing a schematic configuration of a battery module unit according to an embodiment;
Fig. 2 is a cross-sectional view of the battery module unit shown in Fig. 1 when it is cut along a line AA;
Fig. 3 is a diagram showing upper and lower surfaces of a cooler;
Fig. 4 is a diagram showing a modified example of a spacer;
Fig. 5 is a diagram showing a modified example of a spacer;
Fig. 6 is a flowchart showing an example of a flow of a method for manufacturing a battery module according to an embodiment;
Fig. 7 is a diagram showing a battery module unit configured to sandwich a cooler between right and left battery modules; and
Fig. 8 is an exploded perspective view showing an example of a configuration of a battery pack according to an embodiment.

### DESCRIPTION OF EMBODIMENTS

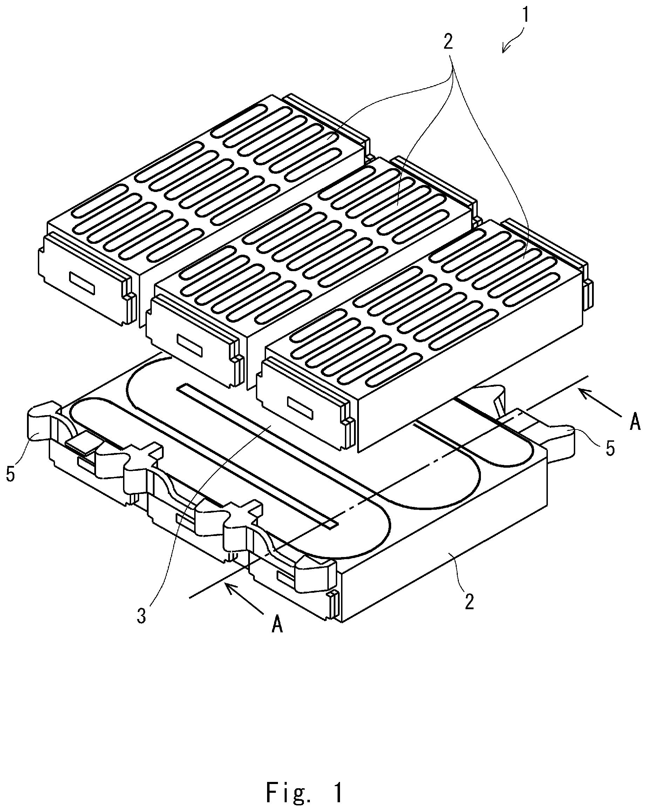

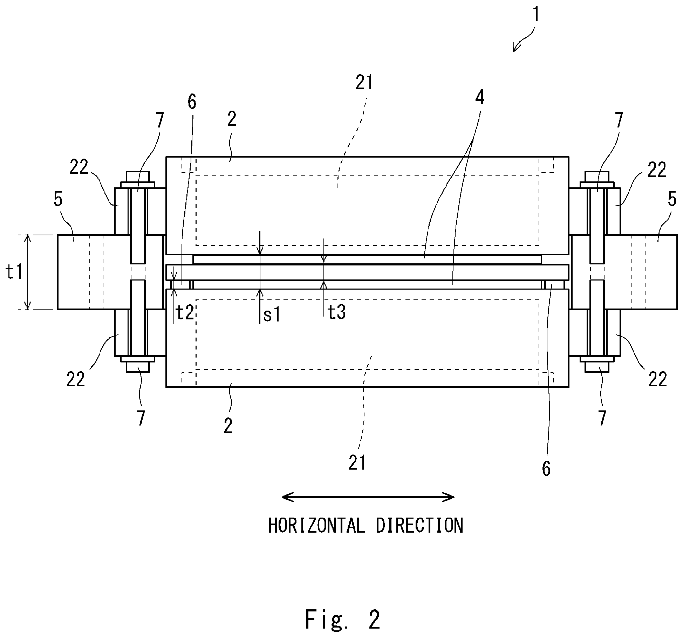

Embodiments of the present disclosure will be described hereinafter with reference to the drawings. Fig. 1 is a perspective view showing a schematic configuration of a battery module unit according to this embodiment. Fig. 2 is a cross-sectional view of the battery module unit shown in Fig. 1 when it is cut along a line AA. Note that, in Fig. 1, an upper battery module is separated from a cooler in order to make it easier to understand it. However, in reality, a lower surface of the upper battery module is close to an upper surface of the cooler as shown in Fig. 2.

A battery module unit 1 includes a pair of upper and lower battery modules 2, a cooler 3 that cools the battery modules 2, heat conductive materials 4 that conduct heat of the battery modules 2 to the cooler 3, a pair of holding members 5 that hold corresponding ends of each of the battery modules 2, and spacers 6 disposed so as to be sandwiched between the battery module 2 and the cooler 3.

The pair of the upper and the lower battery modules 2 are disposed in parallel to each other in a state in which the battery modules are opposed to each other. Each of the battery modules 2 comprises, for example, a plurality of film-like battery cells 21 stacked in the depth direction of Fig. 2. Each of the battery cells 21 is composed of a lithium-ion battery, a nickel-cadmium battery, a nickel-metal-hydrogen battery, or the like.

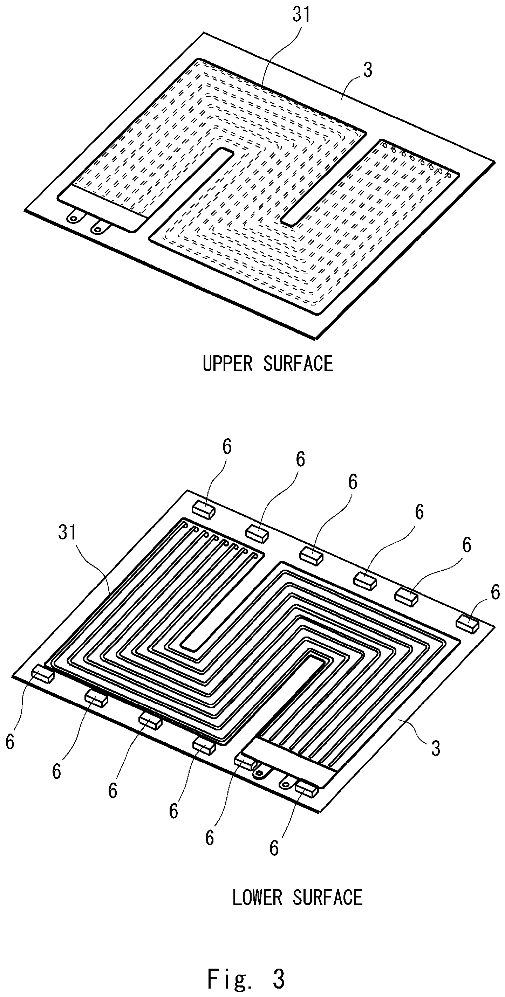

The cooler 3 is disposed in parallel to the pair of battery modules 2 between each of the battery modules 2. Fig. 3 is a diagram showing upper and lower surfaces of the cooler. As shown in Fig. 3, for example, in the cooler 3, a plurality of flow paths 31 through which a cooling liquid or cooling air that absorbs heat from the battery modules 2 flows are formed in substantially rectangular plate-like members. The flow paths 31 are preferably formed along the battery cells 21.

As shown in Fig. 2, the heat conductive material 4 is disposed so as to be sandwiched between each of the battery modules 2 and the cooler 3, and each of the heat conductive materials 4 conducts heat of the corresponding battery module 2 to the cooler 3. Each of the heat conductive materials 4 is, for example, composed of a urethane-based adhesive material which has an adhesive property and is solidified from liquid after the elapse of a certain period of time, but is not limited thereto.

Each of the heat conductive materials 4 may be, for example, formed as a heat conductive sheet, and may be disposed so as to be sandwiched between each of the battery modules 2 and the cooler 3. Further, the heat conductive materials 4 may be made of any materials which can appropriately conduct heat of the battery modules 2 to the cooler 3.

The pair of holding members 5 hold corresponding ends of each of the pair of battery modules 2. Protrusion parts 22 protruding outward are provided at the respective ends of each of the battery modules 2. The protrusion parts 22 may be integrally formed in a case or the like of the battery modules 2, or may be mounted separately from the battery modules 2. The protrusion parts 22 of the battery modules 2 and the holding members 5 are respectively coupled to each other by fastening members 7 such as bolts.

Thus, the pair of holding members 5 hold the pair of battery modules 2 while maintaining a uniform distance s1 between the battery modules 2. At this time, the distance s1 between the pair of battery modules 2 can be adjusted by adjusting a thickness t1 of each of the holding members 5. That is, each of the holding members 5 determines the distance s1 while making the distance s1 between the lower surface of the upper battery module 2 and the upper surface of the lower battery module 2 uniform.

The spacers 6 are disposed so as to be sandwiched between the upper surface of the lower battery module 2 and the lower surface of the cooler 3 together with the heat conductive material 4. Further, the spacers 6 are disposed at the respective ends of each of the lower battery module 2 and the cooler 3 to sandwich the heat conductive material 4.

The above spacers 6 maintain a uniform distance between the upper surface of the lower battery module 2 and the lower surface of the cooler 3. Therefore, the thickness of the lower heat conductive material 4 is determined based on a thickness t2 of each of the above spacers 6.

The thickness of the lower heat conductive material 4 = the thickness t2 of the spacer 6

Meanwhile, as described above, the distance s1 between the lower surface of the upper battery module 2 and the upper surface of the lower battery module 2 is determined based on the thickness t1 of each of the holding members 5. Further, a thickness t3 of the cooler 3 is determined in advance. That is, the thickness of the upper heat conductive material 4 is determined based on the thickness t1 of each of the holding members 5 and the thickness t2 of each of the spacers 6.

The thickness of the upper heat conductive material 4 = the distance s1 between the pair of battery modules 2 - the thickness t3 of the cooler 3 - the thickness t2 of the spacer 6

As described above, the thicknesses of the upper and the lower heat conductive materials 4 can be easily adjusted by the holding members 5 and the spacers 6 while maintaining the thicknesses of the heat conductive materials 4 uniform. Therefore, it is possible to improve the cooling performance of the cooler 3 and to prevent the deformation of the cooler 3 due to the compression reaction force of the heat conductive materials 4.

For example, as shown in the lower part of Fig. 3, the spacers 6 are provided on the lower surface of the cooler 3. A plurality of the spacers 6 may be provided on the lower surface of the cooler 3 along the respective edges thereof.

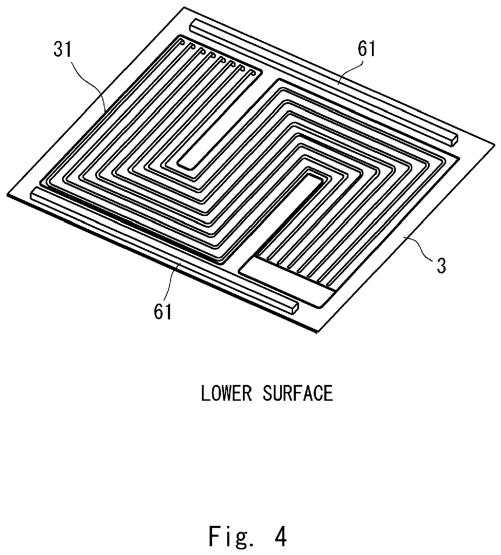

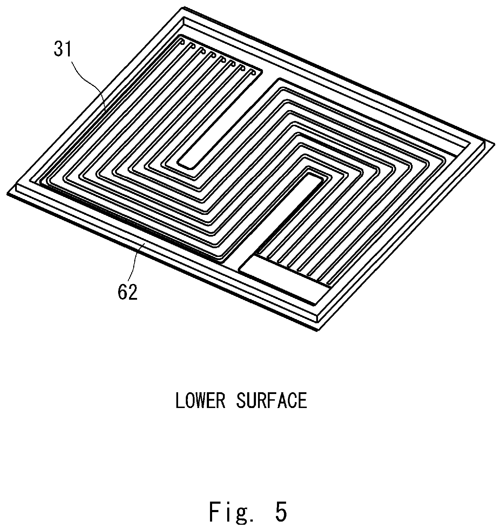

Note that the spacers 6 are intermittently provided on the edges of the lower surface of the cooler 3 at predetermined intervals, but are not limited thereto. Spacers 61 may be continuously and linearly provided as shown in Fig. 4. Further, spacers 62 may be annularly and continuously provided along the edge of the lower surface of the cooler 3 as shown in Fig. 5.

Each of the spacers 6 is a member formed in a box shape as shown in Fig. 3, but is not limited thereto. Each of the spacers 6 may have any shape, such as a cylindrical shape, a conical shape, a rectangular cylindrical shape, or a linear shape. Each of the spacers 6 may be a member having a contact surface of a predetermined area that comes into contact with the battery modules 2 and having a uniform thickness (pitch), and may have any shape which enables a uniform distance between the cooler 3 and each of the battery module 2 to be maintained.

The spacers 6 are integrally formed in the cooler 3, but may be provided separately from the cooler 3. The number of the spacers 6, the positions thereof, the shapes thereof, and a method for forming the spacers 6 are not limited to the above-described structure and configuration, and any structure and configuration which enable a uniform distance between each of the battery modules 2 and the cooler 3 to be maintained may be employed.

The spacers 6 may be provided on the upper surface of the lower battery module 2 instead of being provided on the lower surface of the cooler 3 as described above. Further, the spacers 6 may be provided in the holding members 5.

Further, the spacers 6 may not be fixed to any of the battery module 2, the cooler 3, and the holding member 5. In this case, the spacers 6 are disposed on the upper surface of the lower battery module 2, and then sandwiched between the upper surface of the lower battery module 2 and the lower surface of the cooler 3 from above, so that the spacers 6 are fixed.

Note that each of the spacers 6 is preferably provided at a position where it does not overlap the battery cells 21 when viewed from the horizontal direction (the left/right direction in Fig. 2) of each of the battery modules 2. By disposing the spacers 6 in this way, it is possible to prevent the battery cells 21 from being damaged by the spacers 6 when an external input such as a collision or a road surface interference is received.

Note that, when the spacers 6 are disposed as described above, the spacers 6 are preferably fixed to one of the cooler 3, the battery module 2, and the holding member 5 as described above. By this structure, each of the spacers 6 can be fixed at a position where it can avoid the aforementioned battery cells 21.

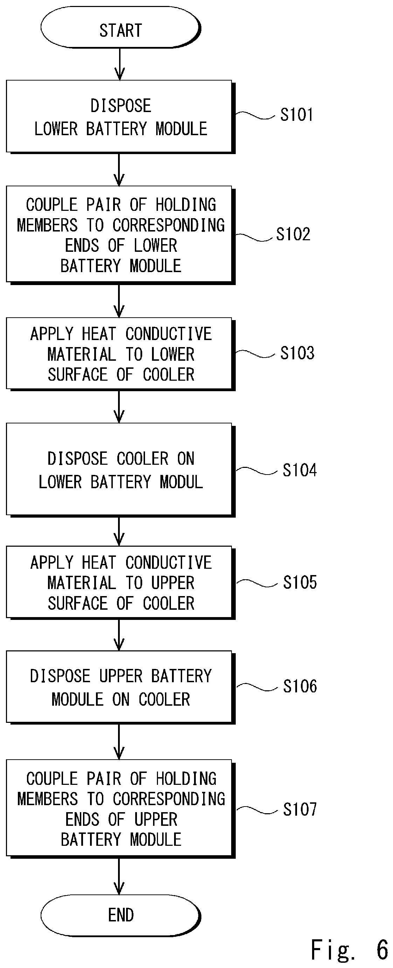

Next, a method for manufacturing the battery module 2 according to this embodiment will be described. Fig. 6 is a flowchart showing an example of a method for manufacturing a battery module according to this embodiment. In this method, as described later, members may be disposed so that they are stacked in order from the lower member.

First, the lower (one) battery module 2 is disposed (Step S101). The pair of holding members 5 are coupled to the corresponding protrusion parts 22 at respective ends of the lower battery module 2 by the fastening members 7 such as bolts (Step S102).

A liquid heat conductive material 4 is applied to the lower surface (one surface) of the cooler 3 (Step S103). Note that, at this time, the heat conductive material 4 may also be applied to the upper surface of the cooler 3. Further, the heat conductive material 4 may be applied to the upper surface (one surface) of the lower battery module 2 instead of the lower surface of the cooler 3.

The cooler 3 is disposed on the lower battery module 2 so that the spacers 6 are sandwiched between the respective ends of the upper surface (the one surface) of the lower battery module 2 and the respective ends of the lower surface of the cooler 3 and so that in between the spacers 6, the heat conductive material 4 is sandwiched between the upper surface of the lower battery module 2 and the lower surface of the cooler 3 (Step S104).

The heat conductive material 4 is applied to the upper surface (another surface) of the cooler 3 (Step S105). Note that the heat conductive material 4 may be applied to the lower surface (one surface) of the upper battery module 2 instead of the upper surface of the cooler 3.

The upper battery module 2 is disposed on the cooler 3 so that the heat conductive material 4 is sandwiched between the lower surface of the upper battery module 2 and the upper surface (the other surface) of the cooler 3 (Step S106).

The protrusion parts 22 at respective ends of the upper battery module 2 are coupled to the pair of corresponding holding members 5 by the fastening members 7 such as bolts (Step S107). At this time, the protrusion parts 22 at respective ends of the lower battery module may be coupled to the pair of corresponding holding members 5 by the fastening members 7 such as bolts.

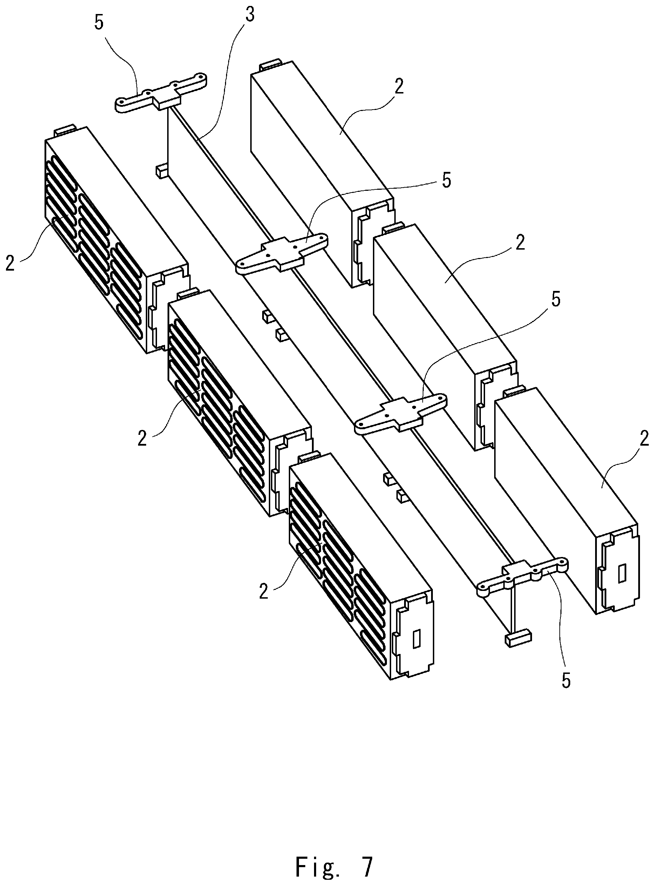

The battery module unit 1 according to the above embodiment is configured so that the cooler 3 is sandwiched between the upper and the lower battery modules 2, but is not limited thereto. For example, as shown in Fig. 7, the battery module unit 1 may be configured so that the cooler 3 is sandwiched between right and left battery modules 2.

In this case, members stacked in the left/right direction may be disposed. However, in a manner similar to that described above, the cooler 3 may be sandwiched between the right and the left battery modules 2 by assembling the members so that they are stacked in order from the lower member and then making them face in the lateral direction as shown in Fig. 7.

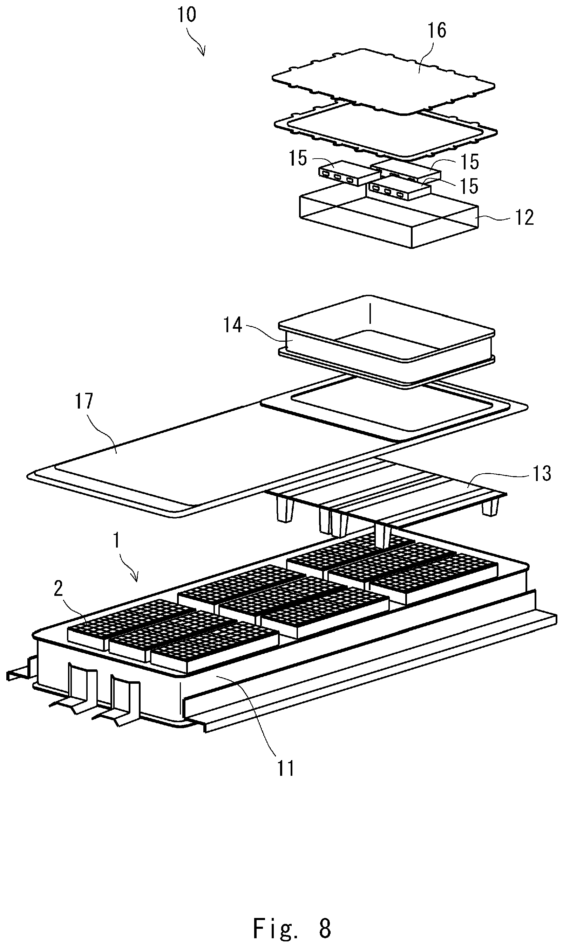

Next, a battery pack including the above-described battery module unit 1 will be described. Fig. 8 is an exploded perspective view showing an example of a configuration of the battery pack according to this embodiment. A battery pack 10 is mounted on a vehicle (a battery electric vehicle, a hybrid electric vehicle, etc.) including an electric motor such as a motor as a driving source, and is used, for example, to supply power to the electric motor.

As shown in Fig. 8, a plurality of battery module units 1 are disposed in a battery case 11.

A device base 13 for fixing a junction box 12 is provided on the battery modules 2. A battery case cover 17 for blocking the upper part of the battery case 11 is provided on the battery case 11. The lower end of a device case 14 is fixed to the battery case cover 17. The device case 14 houses Electronic Control Units (ECU) 15 and the junction box 12.

The junction box 12 is fixed on the device base 13. For example, a plurality of ECUs 15 are fixed on the junction box 12. The ECUs 15, the junction box 12, and the battery module unit 1 are electrically connected to each other through a bus bar or the like. A device cover 16 that covers the upper part of the device case 14 is fixed to the upper end of the device case 14 by bolts or the like.

Several novel embodiments according to the present disclosure have been described above. However, these embodiments are merely presented as examples and are not intended to limit the scope of the disclosure. These novel embodiments can be implemented in various forms. Further, their components/structures may be omitted, replaced, or modified without departing from the scope and the spirit of the disclosure. These embodiments and modifications thereof are included in the scope and the spirit of the disclosure and also included in the disclosure specified in the claims and the scope equivalent thereto.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A battery module unit (1) comprising:
a pair of battery modules (2) disposed in parallel to each other in a state in which the battery modules (2) are opposed to each other;
a cooler (3) disposed between the pair of the battery modules (2) in parallel to the battery modules (2), the cooler (3) being configured to cool the battery modules (2);
a heat conductive material (4) disposed between each of the battery modules (2) and the cooler (3), each of the heat conductive materials (4) being configured to conduct heat of the corresponding battery module (2) to the cooler (3);
a pair of holding members (5) configured to hold corresponding ends of each of the pair of the battery modules (2); and
spacers (6) disposed between one of the battery modules (2) and the cooler (3) together with the heat conductive material (4).

2. The battery module unit (1) according to claim 1, wherein
each of the battery modules (2) comprises a plurality of battery cells (21), and
each of the spacers (6) is provided at a position where the spacer (6) does not overlap the battery cells (21) when viewed from a horizontal direction of each of the battery modules (2).

3. The battery module unit (1) according to claim 1,
wherein the spacers (6) are provided on a surface of the cooler (3), on a surface of one of the battery modules (2), or in the holding members (5).

4. The battery module unit (1) according to claim 1,
wherein the spacers (6) are disposed between one of the pair of the battery modules (2) and the cooler (3).

5. A battery pack (10) comprising the battery module unit (1) according to any one of claims 1 to 4.

6. A method for manufacturing a battery module unit (1), the method comprising:
disposing one battery module (2);
coupling a pair of holding members (5) to corresponding ends of the one battery module (2);
applying a heat conductive material (4) to one surface of a cooler (3) or one surface of the one battery module (2);
disposing the cooler (3) on the one battery module (2) so that spacers (6) are sandwiched between respective ends of the one surface of the one battery module (2) and respective ends of the one surface of the cooler (3) and so that in between the spacers (6), the heat conductive material (4) is sandwiched between the one surface of the one battery module (2) and the one surface of the cooler (3);
applying a heat conductive material (4) to another surface of the cooler (3) or one surface of another battery module (2);
disposing the other battery module (2) on the cooler (3) so that the heat conductive material (4) is sandwiched between the one surface of the other battery module (2) and the other surface of the cooler (3); and
coupling the pair of holding members (5) to corresponding ends of the other battery module (2).
